# EUROPEAN PATENT APPLICATION

(11) **EP 1 791 315 A1**
(43) Date of publication of application: **30.05.2007**
(21) Application number: 05111159.9
(22) Date of filing: 23.11.2005
(51) Int. Cl.: H04L 29/06

(54) **System and method to provide mobile VPN connectivity**

(71) Applicant: Research In Motion Limited, Waterloo, Ontario N2L 3W8 (CA)
(72) Inventor: Coskun, Risvan, Ottawa Ontario KOA 1LO (CA); Reza, Areef, Ottawa Ontario K2W 1E4 (CA); Estable, Luis, Hull J9A 3J3, Quebec (CA)
(74) Representative: Rickard, David John

(57) **Abstract**

A system and method for facilitating the establishment of a virtual private network between a network and a remote computer, the system having: a mobile device connectable to the remote computer and storing a user profile, virtual private network information, and password information; virtual private network software being located on one of the mobile device and the remote computer; an access point communicating with the network; and communication means for communications between the access point and one of the mobile device and the remote computer, wherein the user profile, virtual private network information, and password information is passed to the virtual private network software upon connection of the mobile device to the remote computer, the virtual private network software using the user profile, virtual private network information, and password information to establish a virtual private network through the communications means and the access point to the network.

## Description

The present application relates to the establishment of a virtual private network between a remote computer and a network, and in particular to the configuration of software to facilitate a virtual private network connection.

Virtual private networks require client software installed on the client side. A client application must be installed to facilitate connectivity and configuration of the client application for the virtual private network always requires a user profile integrated with the installed client application. Otherwise, virtual private network connection can never be obtained due to security policies.

When a user wishes to log into a network using a virtual private network, a preconfigured client at home or other remote location is required in order to log into the network.

Having a properly installed client and configuring the client can be problematic. Some VPN configuration is complicated and requires an in-depth knowledge to configure properly. Further, a user may not have the information required to configure the client readily available. Also, in some cases the user may not have privileges to install or configure software on the client machine, and in this case it may be impossible to connect to a VPN with the client machine.

The present method and system overcome the deficiencies of the prior art by allowing the connection to a VPN merely by connecting a mobile device to a computer. In one embodiment, the mobile device preferably includes configuration information, such as password, user profile, and information about a remote virtual private network server, stored on the device. When connected, the mobile device tells the computer to initiate virtual private network (VPN) software situated on the computer, and the information from the mobile device is then passed to the VPN software. This enables the connection of the computer to a VPN without the user having to enter any information.

Alternatively, the VPN software could be located on the mobile device. In this case, once the mobile device is connected to the computer, the VPN software is started and the information stored on the mobile device is passed to the VPN software. The VPN software then uses this information to establish a VPN and the mobile device is a conduit between the server and the computer. The computer could, in this alternative embodiment, consider the connection to the mobile device to be a standard network connection. This requires no software installation on the client computer and thus does not require the user to have privileges on the client computer.

In either of the above cases, the mobile device could be provisioned with the user profile, VPN server information and in some cases even a password. This over the air provisioning could save the user from having to enter any information into the mobile device or computer ever.

The present application therefore preferably provides a system for facilitating the establishment of a virtual private network between a network and a remote computer comprising: a mobile device connectable to said remote computer, the mobile device storing a user profile, virtual private network information, and password information; virtual private network software, said virtual private network software being located on one of the mobile device and the remote computer; an access point communicating with the network; and communication means for communications between the access point and one of the mobile device and the remote computer, said communications means being located on the mobile device if said virtual private network software is on said mobile device, and located on one of the mobile device or the remote computer if the virtual private network software is located on the remote computer, wherein said user profile, virtual private network information, and password information is passed to said virtual private network software upon connection of the mobile device to the remote computer, said virtual private network software using said user profile, virtual private network information, and password information to establish a virtual private network through said communications means and said access point to said network.

The present application further preferably provides a method for facilitating the establishment of a virtual private network between a network and a remote computer comprising the steps of: connecting a mobile device to the remote computer; starting virtual private network software from the mobile device; passing, from the mobile device to virtual private network software, a user profile, virtual private network information, and password information; configuring the virtual private network software with the user profile, virtual private network information, and password information; and initiating a virtual private network from said virtual private network software using network transport.

### BRIEF DESCRIPTION OF THE DRAWINGS

The present application will be better understood with reference to the drawings in which:
**Figure 1** is a block diagram showing connections between various components within a virtual private network according to a preferred embodiment of the present system and method;
**Figure 2** is a block diagram of an alternative configuration of a virtual private network in accordance with the present system and method;
**Figure 3** is a flow-chart of a preferred method for establishing a virtual private network connection;
**Figure 4** is a flow-chart of an alternative method for establishing a virtual private network connection;
**Figure 5** is a block diagram of the components according to the present system for downloading user profile to a mobile device; and
**Figure 6** is a block diagram of an exemplary mobile device that can be used in accordance with the present system and method.

### DESCRIPTION OF PREFERRED EMBODIMENTS

A virtual private network (VPN) requires client software to be installed on the client side. VPN configuration always requires the user profile integrated with the installed client applications. Otherwise, VPN connections can never be obtained due to information technology (IT) security policies. Users always require a pre-configured client at home or any other remote location.

The present application provides a system and method to overcome the deficiencies of the prior art by allowing a mobile device to have built in VPN hardware and software, along with security parameters, to facilitate the immediate connection of a remote client to an enterprise network over a wired or wireless network.

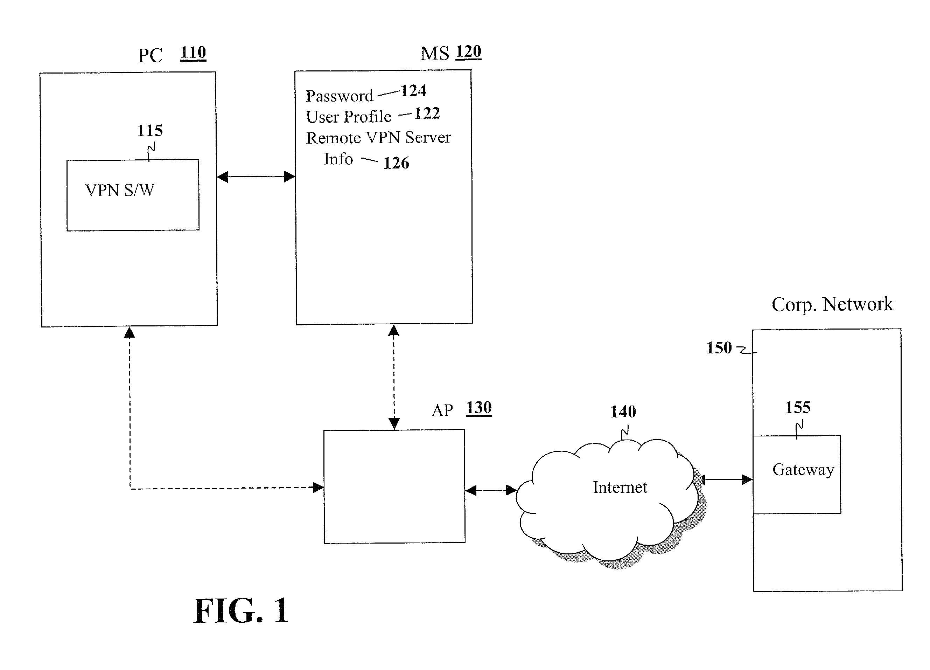

Reference is now made to **Figure 1. Figure 1** illustrates a block diagram of various components within a network to allow a remote client to access a serving network.

As illustrated in **Figure 1,** a client computer **110** is used to connect to a virtual private network. Client computer **110** can be any type of computer, including a desktop or laptop computer or other computers known to those in the art.

Client computer **110,** in the embodiment of **Figure 1,** includes virtual private network software **115** configured on it. Such software is well known.

In the embodiment of **Figure 1,** a mobile device **120** is used to allow personal computer **110** to connect to the virtual private network. Persistent memory on mobile device **120** stores a user profile **122** and can further include password **124** and remote VPN server information **126.** As will be appreciated by those skilled in the art, user profile **122** includes IT information for the enterprise server, and may include: the group that a user belongs to; a user name registered in the VPN server; VPN configuration parameters.

Dynamic RSA key generation may also be produced on the device. Alternatively, RSA key generation can be provided OTA along with the service book and can be updated periodically. In some cases, such as with WiFi, Access Point or any other configuration data may be provided, such as WEP key in the enterprise campus so that a user does not need to deal with access point configuration parameters.

Password **124** could, for example, include an RSA user ID and a dynamic RSA pin generator to facilitate a secure connection to the virtual private network. VPNs can be configured in many forms: (1) A static user and password (2) A Static User ID and temporary password (expired in some time) or (3) A static user id, password id along with dynamic password components. Usually, a dynamic password component can be generated with a RSA token provided to user (for example, clipped to his/her key chain). Alternatively, the device may have an RSA token generator.

Further, the RSA key could be in an enterprise server and can be provided periodically over the air as part of the service book or could be requested by the user or even can be requested during the connection of the VPN transparently to the user.

Remote VPN server information can include an IP address on the network or a host identifier name.

Mobile device 120 can be connected to client computer 110 through various means, including a serial connection such as a USB connection or firewire connection, or wirelessly through a short range wireless protocol such as Bluetooth^{™} or IrDA (Infrared Data Association) connection for example. Other methods of connecting within the mobile device to the client computer 110 are also possible, and the above is not meant to limit the presence system and method in any way.

Once the mobile device **120** is connected to client computer **110,** user profile **122**, password **124** and remote VPN server information **126** is passed to VPN software **115,** allowing VPN software **115** to initiate a VPN connection with the appropriate VPN server using network transport as described below.

As will be appreciated, all user information in the above case needs to be configured only once in the device and never on the client computer **110.** Further, any available VPN software can be used on client computer **110** as long as mobile device **120** can trigger this VPN software.

Once VPN software **115** is triggered, client computer **110** tries to establish the virtual private network through an access point **130.** This can be done either through a connection with client computer **110,** such as a modem, or with a connection on the mobile device, such as an over the air connection such as WiFi (Wireless Fidelity).

Access point **130** connects to an enterprise server **150.** In the example of **Figure 1**, the access point is an access point to the Internet **140.** However, access point **130** could connect to the enterprise server **150** through other networks.

Once a connection is established, gateway **155** controls access to the enterprise server **150.** Using the profile and password **124,** access to enterprise server **150** is negotiated and a virtual private network is established.

As will be appreciated, in the solution of **Figure 1,** very little computing resources are required within the mobile device **120** as mobile device **120** is only providing configuration information and only interacting with the VPN software on the client computer **110.** As will further be appreciated, mobile device **120** does not need to be network capable since a connection to access point **130** can be established through client computer **110,** using, for example, a modem and further using the virtual private network software **115** on the client computer **110.**

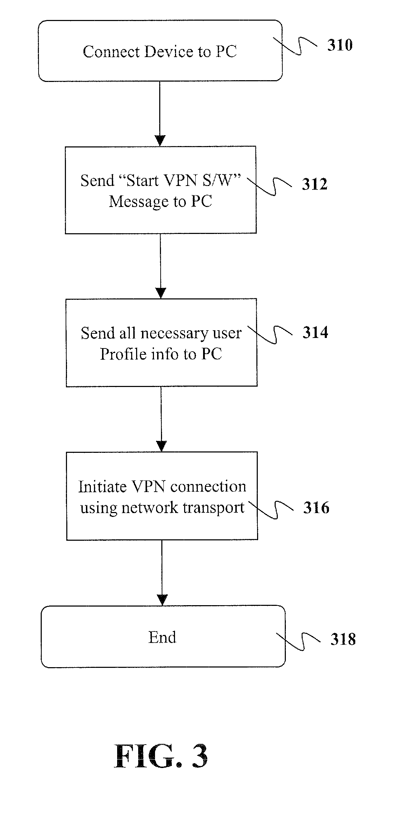

Reference is now made to **Figure 3**. **Figure 3** shows a method for establishing a VPN connection according to the system as illustrated in **Figure 1.** In step **310** a mobile device **120** (as seen in **Figure 1**) is connected to the client computer **110**.

The mobile device next proceeds to step **312** in which it sends a "start VPN software" message to the client computer **110.** This in turn causes the client computer **110** to start the VPN software **115.**

The mobile device next proceeds to step **314** in which all the necessary user profile information from user profile **122,** password **124** and remote VPN server info **126** is sent to VPN software **115.** This allows VPN software **115** to perform a self-configuration in order to connect to an enterprise server **150** without user intervention.

In step **316,** the client computer **110** initiates the VPN connection using network transport. Such network transport could include, as illustrated in **Figure 1,** an access point **130** and the Internet **140.** Once the VPN is established in step **316,** the initiation of the VPN is finished and the mobile device and the client computer both proceed to step **318** in which the starting process finishes. As will be appreciated, the VPN connection will remain active as long as both sides continue the VPN session.

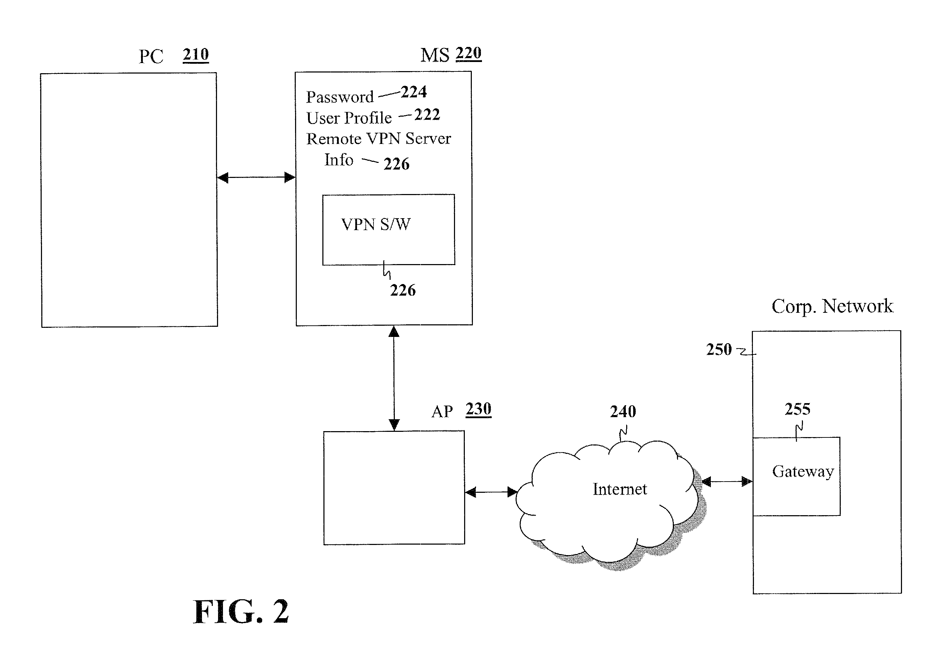

Reference is now made to **Figure 2**. **Figure 2** shows an alternative embodiment of the system and method according to the present application. A client computer **210** wishes to establish a virtual private network with an enterprise server **250.** In order to do this, mobile device **220** keeps track of a user profile **222,** password **224** and remote VPN server info **226.** This is equivalent to what was done in the embodiment of **Figure 1** with user profile **122,** password **124** and remote VPN server info **126.**

The embodiment of **Figure 2,** however, includes VPN software **215** on mobile device **220.** This allows client computer **210** to not include any VPN software on the client computer. Once the mobile device **220** is connected to client computer **210,** VPN software **215** is used to establish VPN session with the server **250** through an access point **230** and a network **240.** The network **240** could include the Internet or any other network as detailed above.

In the embodiment of **Figure 2,** mobile device **220** represents itself to client computer **210** as a traditional network interface. All application data sent to and received from the virtual private network server **250** goes through mobile device **220.**

As will be appreciated by those skilled in the art, the embodiment of **Figure 2** allows all user information to be configured only once on the mobile device **220** and never on client computer **210.** Further, no VPN software **215** is required on the client computer **210.**

Mobile device **220,** in the embodiment of **Figure 2,** must be capable of connecting to a network through an access point **230** and further be capable of running the VPN software to establish the VPN connection and to further encrypt and decrypt IP packets as they go between client computer **210** and VPN server **250.**

As with the above, the VPN server **250** includes the gateway **255** to control access to the server. Parameters such as the user profile and password are passed through the gateway **255** in order to establish the VPN session.

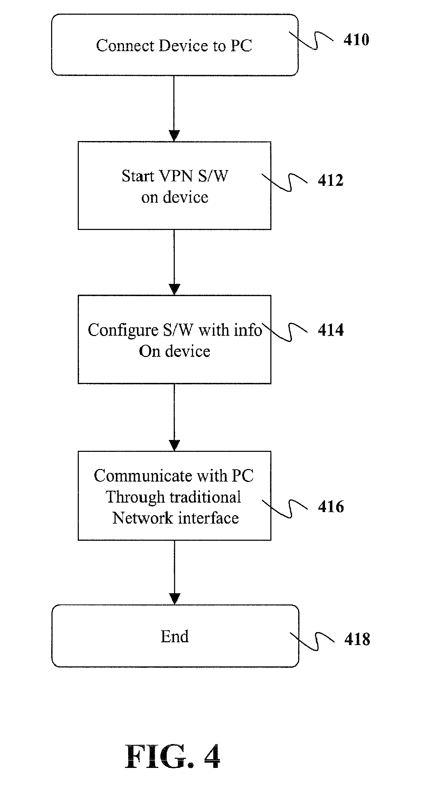

Reference is now made to **Figure 4,** with reference numerals from **Figure 2** being used where applicable. **Figure 4** shows a method for establishing a VPN connection between a client computer **210** and a VPN server **250.** Step **410,** the mobile device **220** is connected to client computer **210.** Mobile device next proceeds to step **412** in which it starts the virtual private network software on the mobile device **220.** The mobile device next proceeds to step **414** in which the virtual private network software **215** is configured with information that is stored on the mobile device **220.**

The mobile device **220** next proceeds to step **416** in which it communicates with a gateway **255** through a traditional network interface with reference to **Figure 2** in order to establish the VPN connection. As will be appreciated, various information such as an RSA password and user profile will be sent to gateway **255** in order to establish the VPN connection.

Once the VPN connection is established in step **416,** the mobile device next proceeds to step **418** in which the attempt to establish the VPN connection is completed and the method to establish the VPN connection is therefore ended.

As will be appreciated by those skilled in the art, if the mobile device **220** is lost or stolen, IT policy will generally restrict access from the device, marking it "kill" or "out of commission".

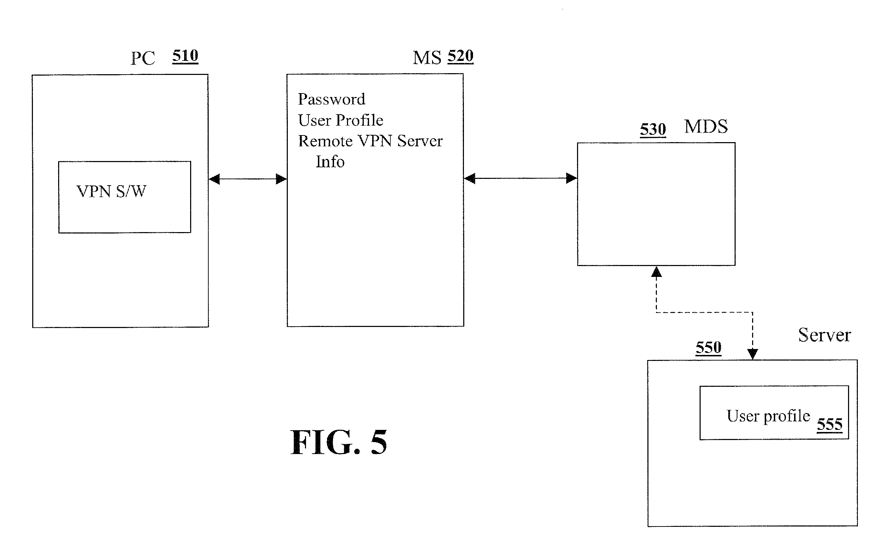

User profile information **122** and **222,** various information to establish a RSA secure ID for the password **124** and **224** and the specific VPN server information **126** and **226** can either be pre-programmed on the mobile device **220** and **120,** can be downloaded manually by the user, or, in certain cases, can be provisioned over the air. Reference is now made to **Figure 5.**

**Figure 5** shows the location of the VPN software as in preferred embodiment of the system of **Figure 1.** However, as will be appreciated by those skilled in the art, the VPN software could also be located on mobile device **220** as illustrated in **Figure 2.**

In **Figure 5,** client computer **510** includes VPN software **515** and communicates to a mobile device **520.** Mobile device communicates with a wireless network that includes a multi point distribution system **530** (MDS), which in turn communicates with a server **550** through a network as would be appreciated by those skilled in the art.

Mobile device **520** can request, from server **550,** user profile information **555** which could then be used for configuring the virtual private network software **515.** This saves the user from creating the user profile or from the information being re-configured during device manufacturing or configuration.

The provisioning of the user profiles over the air through either MDS protocol or other over the air protocols such as service boot protocols is an optional element, and while it enhances the method and system of the present application, it is not required. The present application therefore provides a mobile device that includes a piping rule between a VPN server and a host client platform. Using a serial connection or other connection to the mobile device, an IP session is created and signals can then be piped in and out of the client using the mobile device.

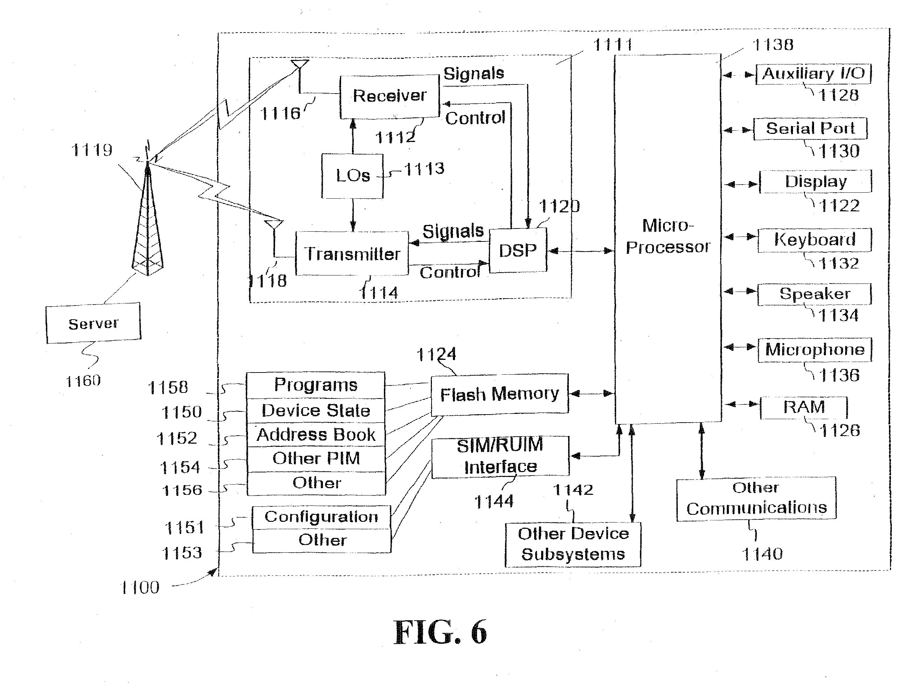

One skilled in the art will appreciate that many mobile devices could be used to implement the above. **Figure 6** illustrates an exemplary mobile device that could be used with the above method and system. Mobile device **1100** is preferably a two-way wireless communication device having at least voice and data communication capabilities. Mobile device **1100** preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile device **1100** is enabled for two-way communication, it will incorporate a communication subsystem **1111,** including both a receiver **1112** and a transmitter **1114,** as well as associated components such as one or more, preferably embedded or internal, antenna elements **1116** and **1118,** local oscillators (LOs) **1113,** and a processing module such as a digital signal processor (DSP) **1120.** As will be apparent to those skilled in the field of communications, the particular design of the communication subsystem **1111** will be dependent upon the communication network in which the device is intended to operate. For example, mobile device **1100** may include a communication subsystem **1111** designed to operate within the Mobitex^{™} mobile communication system, the DataTAC^{™} mobile communication system, GPRS network, UMTS network, EDGE network or CDMA network.

Network access requirements will also vary depending upon the type of network **1119.** For example, in the Mobitex and DataTAC networks, mobile device **1100** is registered on the network using a unique identification number associated with each mobile device. In UMTS and GPRS networks, and in some CDMA networks, however, network access is associated with a subscriber or user of mobile device **1100.** A GPRS mobile device therefore requires a subscriber identity module (SIM) card in order to operate on a GPRS network, and a RUIM in order to operate on some CDMA networks. Without a valid SIM/RUIM card, a GPRS/UMTS/CDMA mobile device may not be fully functional. Local or non-network communication functions, as well as legally required functions (if any) such as emergency calling, may be available, but mobile device **1100** will be unable to carry out any other functions involving communications over the network **1100.** The SIM/RUIM interface **1144** is normally similar to a card-slot into which a SIM/RUIM card can be inserted and ejected like a diskette or PCMCIA card. The SIM/RUIM card can have approximately 64K of memory and hold many key configuration **1151,** and other information **1153** such as identification, and subscriber related information.

When required network registration or activation procedures have been completed, mobile device **1100** may send and receive communication signals over the network **1119.** Signals received by antenna **1116** through communication network **1119** are input to receiver **1112,** which may perform such common receiver functions as signal amplification, frequency down conversion, filtering, channel selection and the like, and in the example system shown in **Figure 6,** analog to digital (A/D) conversion. A/D conversion of a received signal allows more complex communication functions such as demodulation and decoding to be performed in the DSP **1120.** In a similar manner, signals to be transmitted are processed, including modulation and encoding for example, by DSP **1120** and input to transmitter **1114** for digital to analog conversion, frequency up conversion, filtering, amplification and transmission over the communication network **1119** via antenna **1118.** DSP **1120** not only processes communication signals, but also provides for receiver and transmitter control. For example, the gains applied to communication signals in receiver **1112** and transmitter **1114** may be adaptively controlled through automatic gain control algorithms implemented in DSP **1120.**

Network **1119** may further communicate with multiple systems, including a server **1160** and other elements (not shown). For example, network **1119** may communicate with both an enterprise system and a web client system in order to accommodate various clients with various service levels.

Mobile device **1100** preferably includes a microprocessor **1138** which controls the overall operation of the device. Communication functions, including at least data and voice communications, are performed through communication subsystem **1111.** Microprocessor **1138** also interacts with further device subsystems such as the display **1122,** flash memory **1124,** random access memory (RAM) **1126,** auxiliary input/output (I/O) subsystems **1128,** serial port **1130,** keyboard **1132,** speaker **1134,** microphone **1136,** a short-range communications subsystem **1140** and any other device subsystems generally designated as **1142.**

Some of the subsystems shown in **Figure 6** perform communication-related functions, whereas other subsystems may provide "resident" or on-device functions. Notably, some subsystems, such as keyboard **1132** and display **1122,** for example, may be used for both communication-related functions, such as entering a text message for transmission over a communication network, and device-resident functions such as a calculator or task list.

Operating system software used by the microprocessor **1138** is preferably stored in a persistent store such as flash memory **1124,** which may instead be a read-only memory (ROM) or similar storage element (not shown). Those skilled in the art will appreciate that the operating system, specific device applications, or parts thereof, may be temporarily loaded into a volatile memory such as RAM **1126.** Received communication signals may also be stored in RAM **1126.** Further, a unique identifier is also preferably stored in read-only memory.

As shown, flash memory **1124** can be segregated into different areas for both computer programs **1158** and program data storage **1150, 1152, 1154** and **1156.** These different storage types indicate that each program can allocate a portion of flash memory **1124** for their own data storage requirements. Microprocessor **1138,** in addition to its operating system functions, preferably enables execution of software applications on the mobile device. A predetermined set of applications that control basic operations, including at least data and voice communication applications for example, will normally be installed on mobile device **1100** during manufacturing. A preferred software application may be a personal information manager (PIM) application having the ability to organize and manage data items relating to the user of the mobile device such as, but not limited to, e-mail, calendar events, voice mails, appointments, and task items. Naturally, one or more memory stores would be available on the mobile device to facilitate storage of PIM data items. Such PIM application would preferably have the ability to send and receive data items, via the wireless network **1119.** In a preferred embodiment, the PIM data items are seamlessly integrated, synchronized and updated, via the wireless network **1119,** with the mobile device user's corresponding data items stored or associated with a host computer system. Further applications may also be loaded onto the mobile device **1100** through the network **1119,** an auxiliary I/O subsystem **1128,** serial port 1130, short-range communications subsystem 1140 or any other suitable subsystem **1142,** and installed by a user in the RAM **1126** or preferably a nonvolatile store (not shown) for execution by the microprocessor **1138.** Such flexibility in application installation increases the functionality of the device and may provide enhanced on-device functions, communication-related functions, or both. For example, secure communication applications may enable electronic commerce functions and other such financial transactions to be performed using the mobile device **1100.** These applications will however, according to the above, in many cases need to be approved by a carrier.

In a data communication mode, a received signal such as a text message or web page download will be processed by the communication subsystem **1111** and input to the microprocessor **1138,** which preferably further processes the received signal for output to the display **1122,** or alternatively to an auxiliary I/O device **1128.** A user of mobile device **1100** may also compose data items such as email messages for example, using the keyboard **1132,** which is preferably a complete alphanumeric keyboard or telephone-type keypad, in conjunction with the display **1122** and possibly an auxiliary I/O device **1128.** Such composed items may then be transmitted over a communication network through the communication subsystem **1111.**

For voice communications, overall operation of mobile device **1100** is similar, except that received signals would preferably be output to a speaker **1134** and signals for transmission would be generated by a microphone **1136.** Alternative voice or audio I/O subsystems, such as a voice message recording subsystem, may also be implemented on mobile device **1100.** Although voice or audio signal output is preferably accomplished primarily through the speaker **1134,** display **1122** may also be used to provide an indication of the identity of a calling party, the duration of a voice call, or other voice call related information for example.

Serial port **1130** in **Figure 6** would normally be implemented in a personal digital assistant (PDA)-type mobile device for which synchronization with a user's desktop computer (not shown) may be desirable. Such a port **1130** would enable a user to set preferences through an external device or software application and would extend the capabilities of mobile device **1100** by providing for information or software downloads to mobile device **1100** other than through a wireless communication network. The alternate download path may for example be used to load an encryption key onto the device through a direct and thus reliable and trusted connection to thereby enable secure device communication.

Other communications subsystems **1140,** such as a short-range communications subsystem, is a further optional component which may provide for communication between mobile device **1100** and different systems or devices, which need not necessarily be similar devices. For example, the subsystem **1140** may include an infrared device and associated circuits and components or a Bluetooth^{™} communication module to provide for communication with similarly enabled systems and devices.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A system for facilitating the establishment of a virtual private network between a network and a remote computer comprising:
a mobile device connectable to said remote computer, the mobile device storing a user profile, virtual private network information, and password information;
virtual private network software means, said virtual private network software means being located on the mobile device or the remote computer;
an access point communicating with the network; and
communication means for communicating between the access point and the mobile device or the remote computer, said communication means being located on the mobile device if said virtual private network software means is on said mobile device, and located on the mobile device or the remote computer if the virtual private network software means is located on the remote computer,
wherein said user profile, virtual private network information, and password information is passed to said virtual private network software means upon connection of the mobile device to the remote computer, said virtual private network software means using said user profile, virtual private network information, and password information to establish a virtual private network through said communication means and said access point to said network.

2. The system of claim 1, wherein the virtual private network software means is located on the mobile device, and the connection between the remote computer and mobile device is perceived as a standard network connection by the remote computer.

3. The system of claim 1 or claim 2, wherein the user profile and virtual private network information is manually downloaded onto the mobile device from a remote location.

4. The system of any one of claims 1 to 3, wherein parameters for configuring a password are manually downloaded onto the mobile device from a remote location.

5. The system of claim 1 or claim 2, wherein the user profile and virtual private network information are provisioned onto the mobile device.

6. The system of any one of claims 1 to 3, wherein parameters for configuring a password are provisioned onto the mobile device.

7. The system of claim 5 or claim 6, further comprising a multipoint distribution system for provisioning the mobile device.

8. The system of any one of claims 1 to 6, wherein the network further includes a gateway, the gateway being configured to verify user profile and password information from the remote computer.

9. The system of any one of claims 1 to 8, wherein the mobile device is connectable to the remote computer through an interface comprising any one of a Bluetooth^{™} connection, a Universal Serial Bus connection, an Infrared Data Association connection, or a firewire connection.

10. The system of any one of claims 1 to 10, wherein said communication means includes an over the air communication means.

11. A method for facilitating the establishment of a virtual private network between a network and a remote computer comprising the steps of:
connecting a mobile device to the remote computer;
starting virtual private network software means from the mobile device;
passing, from the mobile device to the virtual private network software means, a user profile, virtual private network information, and password information;
configuring the virtual private network software means with the user profile, virtual private network information, and password information; and
initiating a virtual private network from said virtual private network software means using network transport.

12. The method of claim 11, wherein said virtual private network software means is located on the mobile device.

13. The method of claim 12, wherein said network transport is an over the air communication means.

14. The method of claim 11, wherein said virtual private network software means is located on the remote computer.

15. The method of claim 14, wherein said network transport is a modem connection with an access point.

16. The method of any one of claims 11 to 15, wherein the connecting step utilizes an interface between the mobile device and the remote computer, the interface comprising any of a Bluetooth^{™} connection, a Universal Serial Bus connection, an Infrared Data Association connection, or a firewire connection.

17. A computer program product for facilitating the establishment of a virtual private network between a network and a remote computer, the computer program product comprising a computer readable medium having computer readable code embodied therein for implementing in a mobile device or a remote computer the method of any one of claims 11 to 16.

## Amended claims

### Amended claims in accordance with Rule 86(2) EPC.

**1.** A system for facilitating the establishment of a virtual private network between a network and a remote computer comprising:
a mobile communications device (120) connectable to said remote computer (110), the mobile communications device (120) being adapted to wirelessly receive and store information necessary to connect to a virtual private network;
virtual private network software means (115), said virtual private network software means (115) being located on the mobile communications device (120) or the remote computer(110);
an access point (130) communicating with the network (140); and
communication means for communicating between the access point and the mobile communications device (120) or the remote computer(110), said communication means being located on the mobile communications device (120) if said virtual private network software means (115) is on said mobile communications device (120), and located on the mobile communications device (120) or the remote computer (110) if the virtual private network software means is located on the remote computer,
wherein said information is passed to said virtual private network software means upon connection of the mobile communications device (120) to the remote computer (110), said virtual private network software means (115) using said information to establish a virtual private network through said communication means and said access point (130) to said network.

**2.** The system of claim 1, wherein the information necessary to connect to a virtual private network comprises at least one of a user profile, virtual private network information and password information.

**3.** The system of claims 1 or 2, wherein the virtual private network software means is located on the mobile communications device(120), and the connection between the remote computer and mobile communications device (120) is perceived as a standard network connection by the remote computer(110),

**4.** The system of any one of claims 2 to 3, wherein the user profile and virtual private network information is capable of being manually downloaded onto the mobile communications device (120) from a remote location.

**5.** The system of any one of claims 1 to 4, wherein parameters for configuring a password are capable of being manually downloaded onto the mobile communications device (120) from a remote location.

**6.** The system of any one of claims 2 to 5 , wherein the user profile and virtual private network information are provisioned onto the mobile communications device (120).

**7.** The system of any one of claims 2 to 4, wherein parameters for configuring a password are provisioned onto the mobile communications device (120).

**8.** The system of claim 6 or claim 7, further comprising a multipoint distribution system for provisioning the mobile communications device (120).

**9.** The system of any one of claims 2 to 7, wherein the network further comprises a gateway, the gateway being configured to verify user profile and password information from the remote computer (110).

**10.** The system of any one of claims 1 to 9, wherein the mobile communications device (120) is connectable to the remote computer (110), through an interface comprising any one of a Bluetooth^{™} connection, a Universal Serial Bus connection, an Infrared Data Association connection, or a firewire connection.

**11.** The system of any one of claims 1 to 11, wherein said communication means comprises an over the air communication means.

**12.** A method for facilitating the establishment of a virtual private network between a network and a remote computer (110), comprising the steps of:
wirelessly provisioning a mobile communications device with information necessary to connect to a virtual private network;
connecting the mobile communications device to the remote computer (110);
starting virtual private network software means (115) from the mobile communications device (120);
passing, from the mobile communications device (120) to the virtual private network software means, the said information;
configuring the virtual private network software means (115) with the said information; and
initiating a virtual private network from said virtual private network software means (115) using network transport.

**13.** The method of claim 12, wherein said information necessary to connect to a virtual private network comprises at least one of a user profile, virtual private network information and password information.

**14.** The method of any one of claims 13, wherein said virtual private network software means (115) is located on the mobile communications device (120).

**15.** The method of claims 12 to 14, wherein said network transport is an over the air communication means.

**16.** The method of claim 12, wherein said virtual private network software means (120) is located on the remote computer (110).

**17.** The method of claim 15, wherein said network transport is a modem connection with an access point.

**18.** The method of any one of claims 12 to 17, wherein the connecting step utilizes an interface between the mobile communications device (120) and the remote computer (110), the interface comprising any of a Bluetooth^{™} connection, a Universal Serial Bus connection, an Infrared Data Association connection, or a firewire connection.

**19.** A computer program product for facilitating the establishment of a virtual private network between a network and a remote computer, the computer program product comprising a computer readable medium having computer readable code embodied therein for implementing in a mobile communications device (120) or a remote computer (110) the method of any one of claims 12 to 18.
